# EUROPEAN PATENT APPLICATION

(11) **EP 4 578 261 A1**
(43) Date of publication of application: **02.07.2025**
(21) Application number: 24221469.0
(22) Date of filing: 19.12.2024
(51) Int. Cl.: A01D 75/18, A01F 12/56, A01F 12/58

(54) **SYSTEM AND METHOD FOR DETECTING ROTOR SLUGGING OF AN AGRICULTURAL HARVESTER**

(30) Priority: 27.12.2023 US 202318397378
(71) Applicant: CNH Industrial America LLC, New Holland, PA 17557 (US)
(72) Inventor: Rush, Michael P., New Holland, 17557 (US); Harmon, Zachary, New Holland, 17557 (US); Isaac, Nathan E., New Holland, 17557 (US)
(74) Representative: CNH Industrial IP Department

(57) **Abstract**

An agricultural harvester including a rotor and a hydraulic motor configured to rotationally drive the rotor. Furthermore, the harvester includes a supply conduit through which hydraulic fluid is supplied to the hydraulic motor and a return conduit into which the hydraulic fluid from the hydraulic motor is discharged. Additionally, the harvester includes first and second pressure sensors configured to generate data indicative of the pressures of the hydraulic fluid within the supply and return conduits, respectively. A computing system configured to determine the pressures of the hydraulic fluid within the supply and return conduits based on the data generated by the first and second pressure sensors, respectively. Moreover, the computing system is configured to determine when the rotor is slugged based on the determined pressures of the hydraulic fluid within the supply and return conduits.

## Description

### FIELD OF THE INVENTION

The present disclosure generally relates to agricultural harvesters and, more particularly, to systems and methods for detecting rotor slugging of an agricultural harvester.

### BACKGROUND OF THE INVENTION

An agricultural harvester is an agricultural machine used to harvest and process crops. For example, a combine harvester may be used to harvest grain crops, such as wheat, oats, rye, barley, corn, soybeans, and flax or linseed. In general, the objective is to complete several processes, which traditionally were distinct, in one pass of the machine over a particular part of the field. In this regard, most agricultural harvesters are equipped with a harvesting implement, such as a header, which cuts and collects the crop from the field and feeds it to the base harvester for further processing. The agricultural harvester also includes a crop processing system, which performs various processing operations of the harvested crop received from the harvesting implement. For example, the crop processing system generally includes a threshing and separating assembly having a rotor that rotates within a cylindrical chamber to thresh and separate the harvested crop material.

During harvesting operations, the rotor may slug. More specifically, rotor slugging occurs when the cylindrical chamber becomes sufficiently filled with harvested crop material such that the power necessary to rotate the rotor exceeds the available power capacity of the harvester. In such instances, the engine of the harvester may stall. As such, systems and methods for detecting rotor slugging have been developed. While such systems and methods work well, further improvements are needed.

Accordingly, an improved system and method for detecting rotor slugging of an agricultural harvester would be welcomed in the technology.

### SUMMARY OF THE INVENTION

Aspects and advantages of the technology will be set forth in part in the following description, or may be obvious from the description, or may be learned through practice of the technology.

In one aspect, the present subject matter is directed to an agricultural harvester including a threshing and separating assembly having a rotor configured to thresh and separate harvested crop material. Furthermore, the agricultural harvester includes a feeder configured to convey the harvested crop material to the threshing and separating assembly and a hydraulic motor configured to rotationally drive the rotor. Additionally, the agricultural harvester includes a supply conduit through which hydraulic fluid is supplied to the hydraulic motor and a return conduit into which the hydraulic fluid from the hydraulic motor is discharged. Moreover, the agricultural harvester includes a first pressure sensor configured to generate data indicative of a pressure of the hydraulic fluid within the supply conduit, a second pressure sensor configured to generate data indicative of a pressure of the hydraulic fluid within the return conduit, and a computing system communicatively coupled to the first pressure sensor and the second pressure sensor. In this respect, the computing system configured to determine the pressure of the hydraulic fluid within the supply conduit based on the data generated by the first pressure sensor. In addition, the computing system is configured to determine the pressure of the hydraulic fluid within the return conduit based on the data generated by the second pressure sensor. Furthermore, the computing system is configured to determine when the rotor is slugged based on the determined pressure of the hydraulic fluid within the supply conduit and the determined pressure of the hydraulic fluid within the return conduit.

In another aspect, the present subject matter is directed to a system for detecting rotor slugging of an agricultural harvester. The system includes a rotor configured to thresh and separate harvested crop material and a hydraulic motor configured to rotationally drive the rotor. Additionally, the system includes a supply conduit through which hydraulic fluid is supplied to the hydraulic motor and a return conduit into which the hydraulic fluid from the hydraulic motor is discharged. Moreover, the system includes a first pressure sensor configured to generate data indicative of a pressure of the hydraulic fluid within the supply conduit, a second pressure sensor configured to generate data indicative of a pressure of the hydraulic fluid within the return conduit, and a computing system communicatively coupled to the first pressure sensor and the second pressure sensor. As such, the computing system is configured to determine the pressure of the hydraulic fluid within the supply conduit based on the data generated by the first pressure sensor. In addition, the computing system is configured to determine the pressure of the hydraulic fluid within the return conduit based on the data generated by the second pressure sensor. Furthermore, the computing system is configured to determine when the rotor is slugged based on the determined pressure of the hydraulic fluid within the supply conduit and the determined pressure of the hydraulic fluid within the return conduit.

In a further aspect, the present subject matter is directed to a method for detecting rotor slugging of an agricultural harvester. The agricultural harvester, in turn, includes a rotor configured to thresh and separate harvested crop material and a hydraulic motor configured to rotationally drive the rotor. The method includes receiving, with a computing system, first pressure sensor data indicative of a pressure of hydraulic fluid within a supply conduit through which the hydraulic fluid is supplied to the hydraulic motor. Additionally, the method includes determining, with the computing system, the pressure of the hydraulic fluid within the supply conduit based on the received first pressure sensor data. Moreover, the method includes receiving, with the computing system, second pressure sensor data indicative of a pressure of the hydraulic fluid within a return conduit into which the hydraulic fluid from the hydraulic motor is discharged. In addition, the method includes determining, with the computing system, the pressure of the hydraulic fluid within the return conduit based on the received second pressure sensor data. Furthermore, the method includes determining, with the computing system, when the rotor is slugged based on the determined pressure of the hydraulic fluid within the supply conduit and the determined pressure of the hydraulic fluid within the return conduit. Additionally, the method includes initiating, with the computing system, a control action associated with de-slugging the rotor when it is determined that the rotor is slugged.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a partial sectional side view of one embodiment of an agricultural harvester in accordance with aspects of the present subject matter;
FIG. 2 illustrates a schematic view of one embodiment of a system for detecting rotor slugging of an agricultural harvester in accordance with aspects of the present subject matter;
FIG. 3 illustrates a flow diagram providing one embodiment of control logic for detecting rotor slugging of an agricultural harvester in accordance with aspects of the present subject matter; and
FIG. 4 illustrates a flow diagram of one embodiment of a method for detecting rotor slugging of an agricultural harvester in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the appended claims.

In general, the present subject matter is directed to a system and a method for detecting rotor slugging of an agricultural harvester. As will be described below, the agricultural harvester includes a rotor and a hydraulic motor configured to rotationally drive the rotor within a cylindrical chamber of the harvester such that the rotor threshes and separates harvested crop material. Furthermore, the agricultural harvester includes a supply conduit through which hydraulic fluid is supplied to the hydraulic motor (e.g., from a hydraulic pump driven by the engine of the harvester). Additionally, the agricultural harvester includes a return conduit into which the hydraulic fluid from the hydraulic motor is discharged.

In several embodiments, a computing system of the disclosed system is configured to determine when the rotor is slugged based on the pressures of the hydraulic fluid within the supply and return conduits. More specifically, the computing system is configured to determine the pressure of the hydraulic fluid within the supply conduit based on data received from a first pressure sensor. Similarly, the computing system is configured to determine the pressure of the hydraulic fluid within the return conduit based on data received from a second pressure sensor. Moreover, the computing system is configured to determine when the rotor is slugged based on the determined pressures of the hydraulic fluid within the supply and return conduits. For example, in some embodiments, the computing system may determine a differential between the determined pressure of the hydraulic fluid within the supply conduit and the determined pressure of the hydraulic fluid within the return conduit. Thereafter, in such embodiments, the computing system may compare the differential to a threshold value and determine that the rotor is slugged when the differential exceeds the threshold value. In one embodiment, the threshold value may be set based on operator input, thereby allowing the operating to select the level of load on the harvester driveline that constitutes slugging.

Determining when the rotor of an agricultural harvester is slugged based on the pressures of the hydraulic fluid within the supply and return conduits coupled to the hydraulic motor driving the rotor improves the operation of the harvester. Specifically, as mentioned above, the hydraulic motor rotationally drives the rotor during threshing and separating operations. Moreover, rotor slugging occurs when the cylindrical chamber becomes sufficiently filled with harvested crop material such that the power necessary to rotate the rotor exceeds the available power capacity of the harvester. In such instances, the pressure of the hydraulic fluid being supplied to the motor may spike, particularly compared to the pressure of the hydraulic fluid being discharged from the motor. Thus, by using the pressures of the hydraulic fluid within the supply and return conduits coupled to the hydraulic motor driving the rotor, the disclosed system and method can accurately detect when the rotor is slugged.

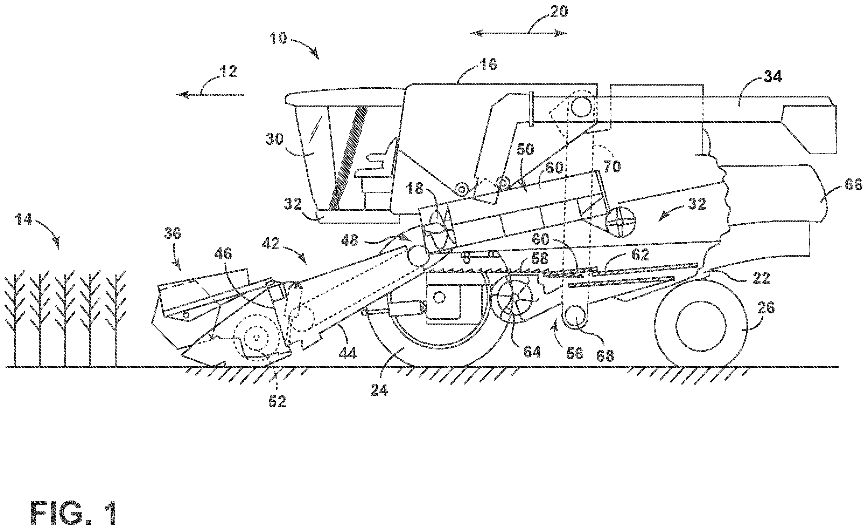

Referring now to the drawings, FIG. 1 illustrates a partial sectional side view of the agricultural harvester 10. In general, the agricultural harvester 10 is configured to travel across a field in a forward direction of travel (indicated by arrow 12) to harvest a standing crop 14 present within the field. While traversing the field, the agricultural harvester 10 is configured to process the harvested crop material and store the grain, seed, or the like within a crop tank 16 of the harvester 10.

In the illustrated embodiment, the agricultural harvester 10 is configured as an axial-flow type combine in which the harvested crop material is threshed and separated while being advanced by and along a rotor 18 extending in an axial direction 20. However, in alternative embodiments, the agricultural harvester 10 may have any other suitable harvester configuration, such as a traverse-flow type configuration in which the rotor 18 extends in a lateral direction.

The agricultural harvester 10 includes a chassis or main frame 22 configured to support and/or couple to various components of the agricultural harvester 10. For example, in several embodiments, the agricultural harvester 10 may include a pair of driven, front wheels 24 and a pair of steerable, rear wheels 26 coupled to the frame 22. As such, the wheels 24, 26 may be configured to support the agricultural harvester 10 relative to the ground and move the agricultural harvester 10 in the forward direction of travel 12. Furthermore, the agricultural harvester 10 may include an operator's platform 28 having an operator's cab 30, a crop processing system 32, the crop tank 16, and a crop unloading tube 34 supported by the frame 22. As will be described below, the crop processing system 32 may be configured to perform various processing operations on the harvested crop material as the crop processing system 32 transfers the harvested crop material from a harvesting implement 36 (e.g., a header) of the agricultural harvester 10 and through the agricultural harvester 10.

Additionally, as shown in FIG. 1, the agricultural harvester 10 includes a feeder 42 that couples to and supports the harvesting implement 36. More specifically, the feeder 42 may include a feeder housing 44 extending from a forward end 46 to an aft end 48. The forward end 46 of the feeder housing 44 may, in turn, be coupled to harvesting implement 36. Moreover, the aft end 48 of the feeder housing 44 may be pivotably coupled to the frame 22 adjacent to a threshing and separating assembly 50 of the crop processing system 32. Such a pivotable coupling may permit movement of the harvesting implement 36 relative to the field surface in the vertical direction.

In several embodiments, the harvesting implement 36 is typically powered by a shaft (not shown) coupled to the feeder 42 such that the harvesting implement 36 engages and/or disengages with the feeder 42. For example, the harvester 10 may have independent power engagement switches (not shown) such that a first switch (not shown) engages the threshing and separation system 50 and a second switch that engages the feeder 42 and harvesting implement 36 (not shown). As such, when the feeder 42 is disengaged, the harvesting implement 36 also halts its operation.

As the agricultural harvester 10 is propelled in the forward direction of travel 12 over the field with the standing crop 14, crop material is severed from the stubble by a cutter bar (not shown) positioned at the front of the harvesting implement 36. The harvested crop material is delivered by a harvesting implement conveyance device 52 (e.g., an auger, belt, chain, etc.) to the forward end 46 of the feeder housing 44, which supplies the harvested crop material to the threshing and separating assembly 50. In general, the threshing and separating assembly 50 may include a cylindrical chamber 54 in which the rotor 18 is rotated to thresh and separate the harvested crop material received therein. That is, the harvested crop material is rubbed and beaten between the rotor 18 and the inner surfaces of the chamber 54 to loosen and separate the grain, seed, or the like from the straw.

The crop material separated by the threshing and separating assembly 50 may fall onto a cleaning assembly 56 of the crop processing system 32. As will be described below, the cleaning assembly 56 may include a series of oscillating components, such as one or more pans 58, pre-sieves 60, and/or sieves 62, that are configured to oscillate relative to the frame 22. As such, the separated material may be spread out via the oscillation of such components 58, 60, 62 and the grain, seeds, or the like may eventually fall through apertures defined by the sieve(s) 62. Additionally, a cleaning fan 64 may be positioned adjacent to one or more of the pre-sieve(s) 60 and the sieve(s) 62 to provide an air flow through that removes chaff and other impurities from the material present thereon. The impurities may be discharged from the agricultural harvester 10 through the outlet of a straw hood 66 positioned at the aft end of the agricultural harvester 10. The cleaned harvested crop passing through the sieve(s) 62 may then fall into a trough of an auger 68, which may transfer the harvested crop to an elevator 70 for delivery to the crop tank 16. The configuration of the agricultural harvester 10 described above and shown in FIG. 1 is provided only to place the present subject matter in an exemplary field of use. Thus, the present subject matter may be readily adaptable to any manner of agricultural harvester configuration.

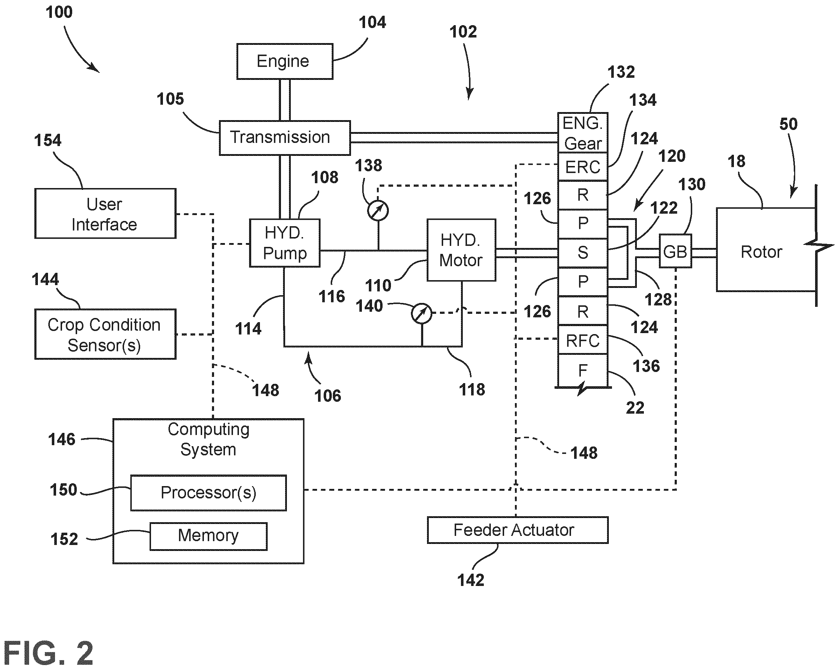

Referring now to FIG. 2, a schematic view of one embodiment of a system 100 for - detecting rotor slugging of an agricultural harvester is illustrated in accordance with aspects of the present subject matter. In general, the system 100 will be described herein with reference to the agricultural harvester 10 described above with reference to FIG. 1. However, it should be appreciated by those of ordinary skill in the art that the disclosed system 100 may generally be utilized with agricultural harvesters having any other suitable harvester configuration.

As shown in FIG. 2, the system 100 includes a driveline 102 of the agricultural harvester 10. Specifically, in several embodiments, the driveline 102 includes an engine 104 and a transmission 105 of the agricultural harvester 10. In this respect, the engine 104 is configured to burn a fuel to generate mechanical power for use in propelling the agricultural harvester 10 in the direction of travel 12 and for powering various components and/or systems of the agricultural harvester 10. The transmission 105, in turn, may adjust the speed and torque of and/or redirect the mechanical power generated by the engine 104 for use by the various components and/or systems of the agricultural harvester 10. Furthermore, the driveline 102 includes a hydraulic drive system 106. In general, the hydraulic drive system 106 includes a hydraulic pump 108 and a hydraulic motor 110. As such, the hydraulic pump 108 may be rotationally driven by the engine 104 (e.g., via the transmission 105) such that the hydraulic pump 108 generates a flow of pressurized hydraulic fluid for powering the hydraulic motor 110. As will be described below, the hydraulic motor 110, in turn, is configured to rotationally drive the rotor 18 of the agricultural harvester 10. More specifically, during operation of the hydraulic drive system 106, the hydraulic pump 108 draws hydraulic fluid from a return conduit 114 and generates a pressurized flow of hydraulic fluid. The pressurized hydraulic fluid flows through a supply conduit 116 from the hydraulic pump 108 to the hydraulic motor 110, thereby rotationally driving the hydraulic motor 110. The hydraulic fluid is discharged from the hydraulic motor 110 into the return conduit 118, thereby allowing the hydraulic fluid to be recirculated. Some additional hydraulic fluid may be supplied from a reservoir (not shown) to replace hydraulic fluid lost to the case drains on the hydraulic pump 108 and the hydraulic motor 110.

Additionally, the system 100 includes a planetary gear set 120 coupled between the hydraulic motor 110 and the rotor 18. More specifically, the planetary gear set 120 includes a sun gear 122, a ring gear 124, and a plurality of planet gears 126 positioned between the sun gear 122 and the ring gear 124. In this respect, the sun gear 122 is coupled to and rotationally driven by the hydraulic motor 110. Moreover, the planet gears 126 are coupled to a carrier 128, which is, in turn, coupled to the rotor 18 via a gearbox 130. In addition, the ring gear 124 can be selectively coupled to the engine 104. For example, an engine-to-ring gear clutch (ERC) 134 may be coupled between the ring gear 124 and an engine gear 132 that is rotationally driven by the engine 104 (e.g., via the transmission 105). Furthermore, the ring gear 124 can be selectively coupled to the frame 22 of the agricultural harvester 10 via a ring gear-to-frame clutch (RFC) 136. As such, during operation of the threshing and separating assembly 50, the hydraulic motor 108 can be rotationally driven by the pressurized hydraulic fluid when (1) the ERC 134 couples the ring gear 124 and an engine gear 132 (i.e., the ERC 134 is closed) or (2) the RFC 136 couples the ring gear 124 and the frame 22 (i.e., the RFC 136 is closed). In this respect, when the ERC 134 is closed and the RFC 136 is opened, the hydraulic motor 108 can speed up or slow down the rotation of the rotor 18 but cannot stop the rotor 18 as the engine 104 will still rotationally drive the rotor 18 even when the hydraulic motor 108 is stopped. Moreover, when the RFC 136 is closed and ERC 134 is opened, the hydraulic motor 108 can rotationally drive the rotor 18 in the forward direction or the reverse direction or the rotor 18 can be halted by stopping the hydraulic motor 108. Conversely, when the ERC 134 and RFC 136 are both open, the hydraulic motor 110 cannot rotationally drive the rotor 18.

Moreover, the system 100 includes first and second pressure sensors 138, 140. In general, the first pressure sensor 138 is configured to generate data indicative of the pressure of the hydraulic fluid within the supply conduit 116. As such, the first pressure sensor 138 may be fluidly coupled to the supply conduit 116. Similarly, the second pressure sensor 140 is configured to generate data indicative of the pressure of the hydraulic fluid within the return conduit 118. In this respect, the second pressure sensor 140 may be fluidly coupled to the return conduit 118. As will be described below, the data generated by the first and second pressure sensors 138, 140 is used to determine when the rotor 18 is slugged.

The first and second pressure sensors 138, 140 may be configured as any suitable devices for sensing or detecting the pressures of the hydraulic fluid within the supply and return conduits 116, 118, respectively. For example, the first and second pressure sensors 138, 140 may correspond to diaphragm pressure sensors, piston pressure sensors, strain gauge-based pressure sensors, electromagnetic pressure sensors, and/or the like.

Furthermore, in several embodiments, the system 100 may include one or more feeder actuators 142. In general, the feeder actuator(s) 142 is configured to rotationally drive or otherwise power a conveyor (not shown) within the feeder housing 44 (FIG. 1) that conveys the harvested crop material from the harvesting implement 36 (FIG. 1) to the threshing and separating assembly 50. As such, the feeder actuator(s) 142 may correspond to any suitable type of actuator(s), such as a hydraulic motor(s), an electric motor(s), and/or the like. As will be described below, when it is determined that the rotor 18 is slugged, the feeder actuator(s) 142 may, in certain embodiments, be controlled to halt operation of the feeder 42 (FIG. 1) and the harvesting implement 36 (FIG. 1) together. Additionally, in some embodiments, the system 100 may include one or more crop condition sensors 144. In general, the crop condition sensor(s) 144 is configured to generate data indicative of one or more conditions of the crops present within the field that are being harvested. For example, such conditions may include the yield, density, height, biomass, moisture, weed presence and/or the like. In this respect, the crop condition sensor(s) 144 may be configured as an imaging device(s) (e.g., a camera(s)), a moisture sensor(s) (e.g., an optical sensor(s)), and/or the like. As will be described below, the data generated by the crop condition sensor(s) 144, in some embodiments, may be used in determining when the rotor 18 is slugged.

Moreover, the system 100 includes a computing system 146 communicatively coupled to one or more components of the agricultural harvester 10 and/or the system 100 to allow the operation of such components to be electronically or automatically controlled by the computing system 146. For instance, the computing system 146 may be communicatively coupled to the sensors 138, 140, 144 via a communicative link 148. As such, the computing system 146 may be configured to receive data from the sensors 138, 140, 144 that is indicative of various operating parameters of the agricultural harvester 10 and/or crop condition parameters. Furthermore, the computing system 146 may be communicatively coupled to the hydraulic pump 108, the ERC 134, the RFC 136, the gearbox 130, and/or the feeder actuator(s) 142 via the communicative link 148. In this respect, the computing system 146 may be configured to control the operation of the hydraulic pump 108, the ERC 134, the RFC 136, the gearbox 130, and/or the feeder actuator(s) 142. In addition, the computing system 146 may be communicatively coupled to any other suitable components of the agricultural harvester 10 and/or the system 100. In general, the computing system 146 may comprise one or more processor-based devices, such as a given controller or computing device or any suitable combination of controllers or computing devices. Thus, in several embodiments, the computing system 146 may include one or more processor(s) 150 and associated memory device(s) 152 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 152 of the computing system 146 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 152 may generally be configured to store suitable computer-readable instructions that, when implemented by the processor(s) 150, configure the computing system 146 to perform various computer-implemented functions, such as one or more aspects of the methods and algorithms that will be described herein. In addition, the computing system 146 may also include various other suitable components, such as a communications circuit or module, one or more input/output channels, a data/control bus and/or the like.

The various functions of the computing system 146 may be performed by a single processor-based device or may be distributed across any number of processor-based devices, in which instance such devices may be considered to form part of the computing system 146. For instance, the functions of the computing system 146 may be distributed across multiple application-specific controllers or computing devices, such as a navigation controller, an engine controller, a transmission controller, and/or the like.

Furthermore, the system 100 may also include a user interface 154. More specifically, the user interface 154 may be configured to receive inputs (e.g., inputs associated with a threshold value for use in determining slugging of the rotor 18) from the operator. As such, the user interface 154 may include one or more input devices, such as touchscreens, keypads, touchpads, knobs, buttons, sliders, switches, mice, microphones, and/or the like, which are configured to receive inputs from the operator. The user interface 154 may, in turn, be communicatively coupled to the computing system 146 via the communicative link 148 to permit the received inputs to be transmitted from the user interface 154 to the computing system 146. In addition, some embodiments of the user interface 154 may include one or more feedback devices (not shown), such as display screens, speakers, warning lights, and/or the like, which are configured to provide feedback from the computing system 146 to the operator. In one embodiment, the user interface 154 may be mounted or otherwise positioned within the operator's cab 30 of the agricultural harvester 10. However, in alternative embodiments, the user interface 154 may mounted at any other suitable location.

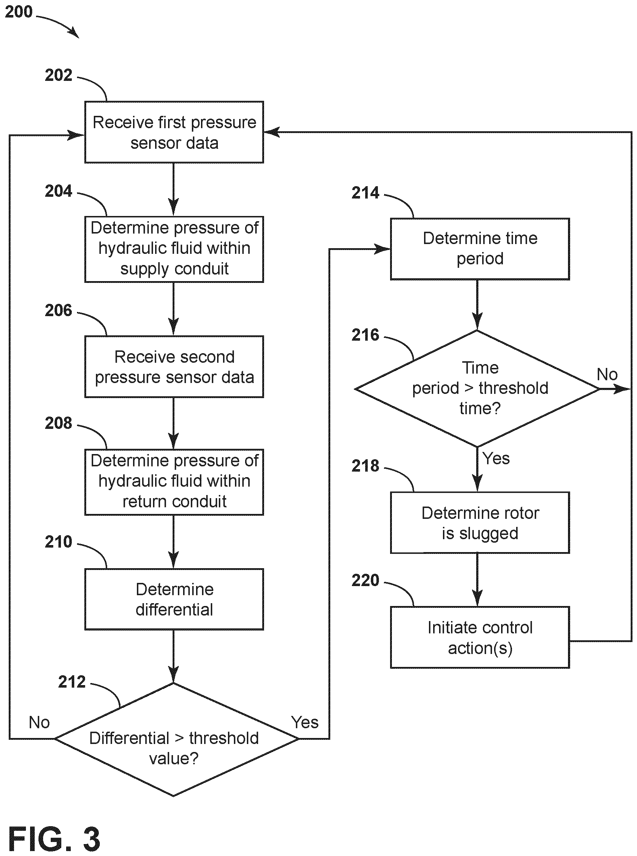

Referring now to FIG. 3, a flow diagram of one embodiment of example control logic 200 that may be executed by the computing system 146 (or any other suitable computing system) for detecting rotor slugging of an agricultural harvester is illustrated in accordance with aspects of the present subject matter. Specifically, the control logic 200 shown in FIG. 2 is representative of steps of one embodiment of an algorithm that can be executed to detect rotor slugging of an agricultural harvester. Thus, in several embodiments, the control logic 200 may be advantageously utilized in association with a system installed on or forming part of an agricultural harvester to allow for real-time detection of rotor slugging of an agricultural harvester without requiring substantial computing resources and/or processing time. However, in other embodiments, the control logic 200 may be used in association with any other suitable system, application, and/or the like for detecting rotor slugging of an agricultural harvester.

As shown, at (202), the control logic 200 includes receiving first pressure sensor data indicative of the pressure of hydraulic fluid within a supply conduit through which the hydraulic fluid is supplied to a hydraulic motor of an agricultural harvester. Specifically, as mentioned above, in several embodiments, the computing system 146 may be communicatively coupled to the first pressure sensor 138 via the communicative link 148. In this respect, as the agricultural harvester 10 travels across the field to perform a harvesting operation thereon, the computing system 146 may receive data from the first pressure sensor 138. Such data may, in turn, be indicative of the pressure of hydraulic fluid within the supply conduit 116 through which the hydraulic fluid is supplied to the hydraulic motor 110 of the agricultural harvester 10.

Furthermore, at (204), the control logic 200 includes determining the pressure of the hydraulic fluid within the supply conduit based on the received first pressure sensor data. Specifically, in several embodiments, the computing system 146 may be configured to determine the pressure of the hydraulic fluid within the supply conduit 116 based on the received first pressure sensor data. For example, the computing system 146 may include any suitable look-up table(s), mathematical equation(s), and/or algorithm(s) stored within its memory device(s) 152 that correlate the received first pressure sensor data to the corresponding pressure value(s). As will be described below, the computing system 146 may determine when the rotor of the agricultural harvester 10 is slugged based on the determined pressure of the hydraulic fluid within the supply conduit 116.

Additionally, at (206), the control logic 200 includes receiving second pressure sensor data indicative of the pressure of the hydraulic fluid within a return conduit into which the hydraulic fluid from the hydraulic motor is discharged. Specifically, as mentioned above, in several embodiments, the computing system 146 may be communicatively coupled to the second pressure sensor 140 via the communicative link 148. In this respect, as the agricultural harvester 10 travels across the field to perform the harvesting operation thereon, the computing system 146 may receive data from the second pressure sensor 140. Such data may, in turn, be indicative of the pressure of hydraulic fluid within the return conduit 118 into which the hydraulic fluid from the hydraulic motor 110 is discharged. Moreover, at (208), the control logic 200 includes determining the pressure of the hydraulic fluid within the return conduit based on the received second pressure sensor data. Specifically, in several embodiments, the computing system 146 may be configured to determine the pressure of the hydraulic fluid within the return conduit 118 based on the received second pressure sensor data. For example, the computing system 146 may include any suitable look-up table(s), mathematical equation(s), and/or algorithm(s) stored within its memory device(s) 152 that correlate the received second pressure sensor data to the corresponding pressure value(s). As will be described below, the computing system 146 may determine when the rotor of the agricultural harvester 10 is slugged based on the determined pressure of the hydraulic fluid within the return conduit 118.

In alternative embodiments, (206) and (208) may be performed before or simultaneously with (202) and (204), respectively.

In addition, at (210), the control logic 200 includes determining the differential between the determined pressure of the hydraulic fluid within the supply conduit and the determined pressure of the hydraulic fluid within the return conduit. Specifically, in several embodiments, the computing system 146 may be configured to determine the differential or difference between the pressure of the hydraulic fluid within the supply conduit 116 determined at (204) and the pressure of the hydraulic fluid within the return conduit 118 determined (208). As will be described below, the computing system 146 may determine when the rotor of the agricultural harvester 10 is slugged based on the determined differential between the pressures of the hydraulic fluid within the supply conduit 116 and the return conduit 118.

As shown in FIG. 3, at (212), the control logic 200 includes comparing the determined differential to a threshold value. Specifically, in several embodiments, the computing system 146 may be configured to compare the differential determined (210) to a threshold value. When the determined differential is equal to or falls below the threshold value, the rotor 18 is not slugged. In such instances, the control logic 200 returns (202). Conversely, when the determined differential is equal to or falls below the threshold value, the control logic 200 proceeds to (214).

In some embodiments, the threshold value is set based on a received operator input (e.g., via the user interface 154). Thus, in such embodiments, the operator may determine the amount of the load on the driveline 102 that constitutes slugging. For example, some operators may set the threshold value such that the control logic 200 does not determine the rotor 18 is slugged until the engine 104 is close to stalling. Conversely, other operators may set the threshold value such that the control logic 200 determines the rotor 18 is slugged when there is an elevated load on the engine 104. In other embodiments, the threshold value may be set based on received crop condition sensor data (e.g., data received from the crop condition sensor(s) 144). Alternatively, the threshold value may be a preset value, such as a value set at the factory.

Furthermore, at (214), the control logic 200 includes determining a time period during which the determined differential exceeds the threshold value. Specifically, in several embodiments, the computing system 146 may be configured to determine a time period during which the differential determined at (210) exceeds the threshold value at (212). Additionally, at (216), the control logic 200 includes comparing the determined time to a threshold time period. Specifically, in several embodiments, the computing system 146 may be configured to compare the time period determined (214) to a threshold time period. When the determined time period is equal to or falls below the threshold time period, the rotor 18 is not slugged. In such instances, the control logic 200 returns (202). Conversely, when the determined time period exceeds the threshold time period, the control logic 200 proceeds to (218).

Moreover, at (218), the control logic 200 includes determining that a rotor of the agricultural harvester is slugged. Specifically, in several embodiments, when it is determined at (216) that the time period is exceeds the threshold time period, the computing system 146 may be configured to determine that the rotor 18 is slugged. Conversely, in other embodiments, when it is determined at (212) that the differential exceeds the threshold value, the computing system 146 may be configured to determine that the rotor 18 is slugged. That is, in such embodiments, the control logic 200 omits (214) and (216).

In addition, at (220), the control logic 200 includes initiating one or more control actions associated with de-slugging the rotor. Specifically, in several embodiments, when it is determined at (218) that the rotor 18 is slugged, the computing system 146 may be configured to initiate one or more control actions associated with de-slugging the rotor 18. For example, in one embodiment, the control action(s) may include halting operation of the feeder 42 and the harvesting implement 36 of the agricultural harvester 10. Specifically, in such an embodiment, when it is determined at (218) that the rotor 18 is slugged, the computing system 146 may transmit control signals to the feeder actuator(s) 142. Such control signals, in turn, may instruct the feeder actuator(s) 142 to halt operation of the conveyer (not shown) within the feeder housing 44 and the harvesting implement 36, thereby preventing additional harvested crop material from entering the threshing and separating assembly 50. This may reduce the load on the driveline 102 and allow the threshing and separating assembly 50 process the harvested crop material therein without stalling the engine 104. Such a control action may be useful when the threshold value to which the differential is compared is relatively low (e.g., such that control logic 200 determines slugging when there is an elevated load on the engine 104).

In another embodiment, the control action(s) may include halting operation of the feeder 42, the harvesting implement 36, and the rotor 18 of the agricultural harvester 10. Specifically, in such an embodiment, when it is determined at (218) that the rotor 18 is slugged, the computing system 146 may transmit control signals to the feeder actuator(s) 142. Such control signals, in turn, may instruct the feeder actuator(s) 142 to halt operation of the conveyer (not shown) within the feeder housing 44 and the harvesting implement 36, thereby preventing additional harvested crop material from entering the threshing and separating assembly 50. Additionally, in such instances, the computing system 146 may transmit control signals to the hydraulic pump 108, the ERC 134, the RFC 136, and/or the gearbox 130. Such control signals, in turn, may instruct the hydraulic pump 108, the ERC 134, the RFC 136, and/or the gearbox 130 to operate in an manner that halts rotation of the rotor 18. This may reduce the load on the driveline 102 to prevent stalling the engine 104. Such a control action may be useful when the threshold value to which the differential is compared is relatively high (e.g., such that control logic 200 determines slugging when the engine 104 is on the verge of stalling).

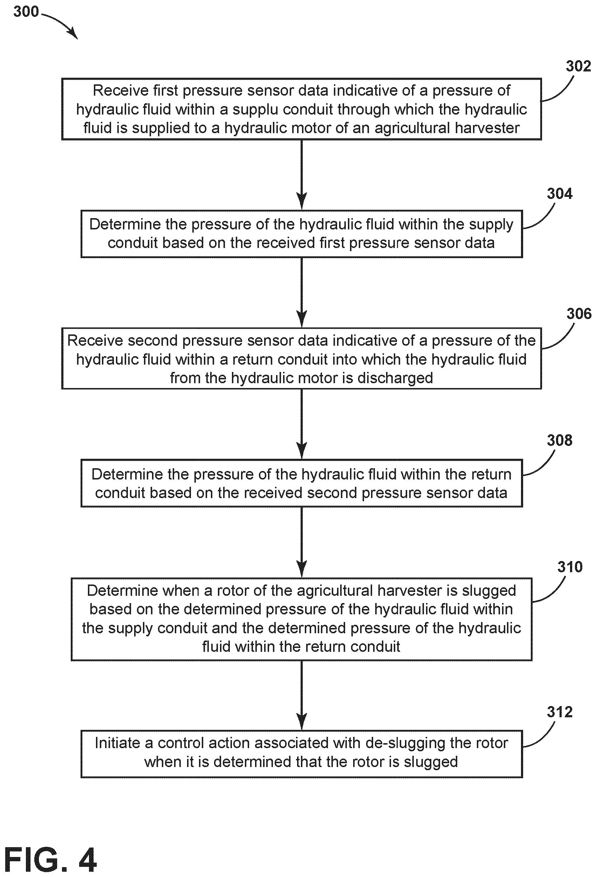

Referring now to FIG. 4, a flow diagram of one embodiment of a method 300 for detecting rotor slugging of an agricultural harvester is illustrated in accordance with aspects of the present subject matter. In general, the method 300 will be described herein with reference to the agricultural harvester 10 and the system 100 described above with reference to FIGS. 1-3. However, it should be appreciated by those of ordinary skill in the art that the disclosed method 300 may generally be implemented with any agricultural harvester having any suitable harvester configuration and/or within any system having any suitable system configuration. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 4, at (302), the method 300 includes receiving, with a computing system, first pressure sensor data indicative of a pressure of hydraulic fluid within a supply conduit through which the hydraulic fluid is supplied to a hydraulic motor of an agricultural harvester. For instance, as described above, the computing system 146 may be configured to receive first pressure sensor data from the first pressure sensor 138 via the communicative link 148. The received first pressure sensor data, in turn, is indicative of the pressure of hydraulic fluid within the supply conduit 116 through which the hydraulic fluid is supplied to the hydraulic motor 110.

Furthermore, at (304), the method 300 includes determining, with the computing system, the pressure of the hydraulic fluid within the supply conduit based on the received first pressure sensor data. For instance, as described above, the computing system 146 may be configured to determine the pressure of the hydraulic fluid within the supply conduit 116 based on the received first pressure sensor data.

Additionally, at (306), the method 300 includes receiving, with the computing system, second pressure sensor data indicative of a pressure of the hydraulic fluid within a return conduit into which the hydraulic fluid from the hydraulic motor is discharged. For instance, as described above, the computing system 146 may be configured to receive second pressure sensor data from the second pressure sensor 140 via the communicative link 148. The received second pressure sensor data, in turn, is indicative of the pressure of the hydraulic fluid within the return conduit 118 into which the hydraulic fluid from the hydraulic motor 110 is discharged.

Moreover, at (308), the method 300 includes determining, with the computing system, the pressure of the hydraulic fluid within the return conduit based on the received second pressure sensor data. For instance, as described above, the computing system 146 may be configured to determine the pressure of the hydraulic fluid within the return conduit 118 based on the received second pressure sensor data.

In addition, at (310), the method 300 includes determining, with the computing system, when the rotor is slugged based on the determined pressure of the hydraulic fluid within the supply conduit and the determined pressure of the hydraulic fluid within the return conduit. For instance, as described above, the computing system 146 may be configured to determine when the rotor 18 is slugged based on the determined pressure of the hydraulic fluid within the supply conduit 116 and the determined pressure of the hydraulic fluid within the return conduit 118.

Furthermore, at (312), the method 300 includes initiating, with the computing system, a control action associated with de-slugging the rotor when it is determined that the rotor is slugged. For instance, as described above, the computing system 146 may be configured to initiate one or more control actions associated with de-slugging the rotor 18 when it is determined that the rotor 18 is slugged. Such control actions may include halting operation of the feeder 42, the harvesting implement 26, and/or the rotor 18 of the agricultural harvester 10.

It is to be understood that the steps of the control logic 200 and the method 300 are performed by the computing system 146 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the computing system 146 described herein, such as the control logic 200 and the method 300, is implemented in software code or instructions which are tangibly stored on a tangible computer readable medium. The computing system 146 loads the software code or instructions via a direct interface with the computer readable medium or via a wired and/or wireless network. Upon loading and executing such software code or instructions by the computing system 146, the computing system 146 may perform any of the functionality of the computing system 146 described herein, including any steps of the control logic 200 and the method 300 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

## Claims

1. An agricultural harvester (10), comprising:
a threshing and separating assembly (50) including a rotor (18) configured to thresh and separate harvested crop material;
a feeder (42) configured to convey the harvested crop material to the threshing and separating assembly (50);
a hydraulic motor (110) configured to rotationally drive the rotor (18);
a supply conduit (116) through which hydraulic fluid is supplied to the hydraulic motor (110);
a return conduit (118) into which the hydraulic fluid from the hydraulic motor (110) is discharged;
a first pressure sensor (138) configured to generate data indicative of a pressure of the hydraulic fluid within the supply conduit (116);
a second pressure sensor (140) configured to generate data indicative of a pressure of the hydraulic fluid within the return conduit (118); and
a computing system (146) communicatively coupled to the first pressure sensor (138) and the second pressure sensor (140), the computing system (146) configured to:
determine the pressure of the hydraulic fluid within the supply conduit (116) based on the data generated by the first pressure sensor (138);
determine the pressure of the hydraulic fluid within the return conduit (118) based on the data generated by the second pressure sensor (140); and
determine when the rotor (18) is slugged based on the determined pressure of the hydraulic fluid within the supply conduit (116) and/or the determined pressure of the hydraulic fluid within the return conduit (118).

2. The agricultural harvester (10) of claim 1, wherein, when determining when the rotor (18) is slugged, the computing system (146) is configured to:
determine a differential between the determined pressure of the hydraulic fluid within the supply conduit (116) and the determined pressure of the hydraulic fluid within the return conduit (118); and
determine when the rotor (18) is slugged based on the determined differential.

3. The agricultural harvester (10) of claim 2, wherein, when determining when the rotor (18) is slugged, the computing system (146) is configured to:
compare the determined differential to a threshold value; and
determine that the rotor (18) is slugged when the determined differential exceeds the threshold value.

4. The agricultural harvester (10) of claim 2, wherein, when determining when the rotor (18) is slugged, the computing system (146) is configured to:
compare the determined differential to a threshold value;
determine a time period during which the determined differential exceeds the threshold value; and
determine that the rotor (18) is slugged when the determined time period exceeds a threshold time period.

5. The agricultural harvester (10) of claim 3 or 4, wherein the threshold value is set based on a received operator input.

6. The agricultural harvester (10) of claim 3 or 4, wherein the threshold value is set based on received crop condition sensor data.

7. The agricultural harvester (10) according to any of the previous claims, wherein the computing system (146) is further configured to:
initiate a control action associated with de-slugging the rotor (18) when it is determined that the rotor (18) is slugged.

8. The agricultural harvester (10) of claim 7, wherein the control action comprises halting operation of the feeder (42).

9. The agricultural harvester (10) of claim 7 or 8, wherein the control action comprises halting operation of the rotor (18).

10. A method (300) for detecting rotor (18) slugging of an agricultural harvester (10) according to any of the previous claims, the method comprising:
receiving, with the computing system (146), first pressure sensor (138) data indicative of a pressure of hydraulic fluid within a supply conduit (116) through which the hydraulic fluid is supplied to the hydraulic motor (110);
determining, with the computing system (146), the pressure of the hydraulic fluid within the supply conduit (116) based on the received first pressure sensor (138) data;
receiving, with the computing system (146), second pressure sensor (140) data indicative of a pressure of the hydraulic fluid within a return conduit (118) into which the hydraulic fluid from the hydraulic motor (110) is discharged;
determining, with the computing system (146), the pressure of the hydraulic fluid within the return conduit (118) based on the received second pressure sensor (140) data;
determining, with the computing system (146), when the rotor (18) is slugged based on the determined pressure of the hydraulic fluid within the supply conduit (116) and/or the determined pressure of the hydraulic fluid within the return conduit (118).

11. The method (300) of claim 10, wherein determining when the rotor (18) is slugged comprises:
determining, with the computing system (146), a differential between the determined pressure of the hydraulic fluid within the supply conduit (116) and the determined pressure of the hydraulic fluid within the return conduit (118); and
comparing, with the computing system (146), the determined differential to a threshold value; and
determining, with the computing system (146), that the rotor (18) is slugged when the determined differential exceeds a threshold value.

12. The method (300) of claim 11, wherein the threshold value is set based on a received operator input.

13. The method (300) of claim 11, wherein the threshold value is set based on received crop condition sensor data.

14. A method (300) according to any of the claims 10 to 13, the method further comprising initiating, with the computing system (146), a control action associated with de-slugging the rotor (18) when it is determined that the rotor (18) is slugged.

15. The method (300) of claim 14, wherein the control action comprises halting operation of the feeder (42) and/or the rotor (18) of the agricultural harvester (10).
